# EUROPÄISCHE PATENTSCHRIFT

(11) **EP 2 729 321 B1**
(45) Veröffentlichungstag und Bekanntmachung des Hinweises auf die Patenterteilung: **16.08.2023**
(21) Anmeldenummer: 12720180.4
(22) Anmeldetag: 10.05.2012
(51) Int. Cl.: B60L 53/00, B60L 53/14, B60L 53/50, B60L 3/04, B60L 3/00, B60L 3/12

(54) **VERFAHREN UND VORRICHTUNG ZUM BETREIBEN EINES FAHRZEUGS, COMPUTERPROGRAMM, COMPUTERPROGRAMM-PRODUKT**
METHOD AND DEVICE FOR OPERATION OF A VEHICLE, SOFTWARE, SOFTWARE PRODUCT
PROCÉDÉ ET DISPOSITIF POUR OPÉRER UN VÉHICULE, LOGICIEL, PRODUIT DE LOGICIEL

(30) Priorität: 08.07.2011 DE 102011078869
(43) Veröffentlichungstag der Anmeldung: 14.05.2014
(73) Patentinhaber: Robert Bosch GmbH, 70442 Stuttgart (DE)
(72) Erfinder: NORDBRUCH, Stefan, 70806 Kornwestheim (DE); GALBAS, Roland, 71640 Ludwigsburg (DE)
(86) Internationale Anmeldenummer: PCT/EP2012/058641
(87) Internationale Veröffentlichungsnummer: WO 2013/007418

(56) Entgegenhaltungen:
- DE-A1-102009 016 895
- US-A- 5 596 258
- US-A1- 2010 072 946

## Beschreibung

Die Erfindung betrifft ein Verfahren und eine Vorrichtung zum Betreiben eines Fahrzeugs, das als Antriebsvorrichtung mindestens eine elektrische Maschine aufweist, der wenigstens ein elektrischer Speicher zugeordnet ist, wobei der elektrische Speicher mittels einer externen Energiequelle im Stillstand des Fahrzeugs aufgeladen wird.

Ferner betrifft die Erfindung ein Computerprogramm sowie ein Computerprogramm-Produkt.

### Stand der Technik

Verfahren und Vorrichtungen der eingangs genannten Art sind aus dem Stand der Technik bekannt. Fahrzeuge, die eine elektrische Maschine als Antriebsvorrichtung aufweisen, insbesondere sogenannte Elektrofahrzeuge, die nur eine oder mehrere elektrische Maschinen als Antriebsvorrichtung umfassen, erzeugen durch die Anwendung von hohen Spannungen und Strömen erhöhte Risiken für den Benutzer und Fahrer des Fahrzeugs. Insbesondere der Ladevorgang stellt eine gefährliche Situation dar. Durch unsichere Zustände des Fahrzeugs bei einem Aufladevorgang mittels einer externen Energiequelle, beispielsweise an einer sogenannten Stromtankstelle, kann es zum Beispiel durch ein Wegrollen des Fahrzeugs oder einen fehlerhaften Ladevorgang zu kritischen Situationen kommen. Die Wahrscheinlichkeit von Fehlern erhöht sich dabei mit zunehmender Ladezeit.

Um derart kritische Situationen zu vermeiden oder in den Griff zu bekommen, sehen aktuelle Lösungen vor, dass während des Ladevorgangs alle Steuergeräte im vollaktiven Modus betrieben werden, um sämtliche Fehlerzustände zu erfassen und um das Fahrzeug in einem sicheren Fahrzeugzustand zu halten. Nachteilig hierbei ist der hohe Energieverbrauch, der für die vollaktiven Steuergeräte erforderlich ist, sowie die massiv erhöhte Anforderung an die Lebensdauer der Steuergeräte und Komponenten, die nun auch während des Ladevorgangs betrieben und damit beansprucht werden. Hierdurch werden insgesamt die Kosten, insbesondere die Wartungskosten, sowie die Umweltbelastung durch das Fahrzeug erhöht.

Aus der US 2010/0072946 A1 ist ein Verfahren zum Betreiben eines elektrischen Fahrzeugs bekannt, bei welchem mittels einer externen Energiequelle ein elektrischer Speicher des Fahrzeugs aufgeladen wird. Dabei ist vorgesehen, dass vor dem Duchführen eines Ladevorgangs geprüft wird, ob eine Parkbremse des Fahrzeugs aktiviert ist. Ein ähnliches Verfahren wird in der Druckschrift US 5,596,258 A offenbart. Auch hier ist vorgesehen, einen Ladevorgang nur dann durchzuführen, wenn zuvor erfasst wurde, dass eine Parkbremse aktiviert ist.

Aus der Offenlegungsschrift DE 10 2009 016 895 A1 ist eine Ladeanschlusseinrichtung für ein Kraftfahrzeug bekannt, die zum elektrischen Verbinden eines Akkumulators des Kraftfahrzeugs mit einer externen elektrischen Versorgungsquelle dient.

### Offenbarung der Erfindung

Die Erfindung hat den Vorteil, dass die Lebensdauer der Systemkomponenten des Fahrzeugs erhöht und der Energieverbrauch insgesamt reduziert wird. Das erfindungsgemäße Verfahren zeichnet sich durch die Merkmale des Anspruchs 1 aus. Die erfindungsgemäße Vorrichtung ist durch die Merkmale des Anspruchs 6, das erfindungsgemäße Computerprogramm ist durch die Merkmale des Anspruchs 8 und das erfindungsgemäße Computerprogrammprodukt ist durch die Merkmale des Anspruchs 9 beschrieben.

Erfindungsgemäß wird bei Erfassen eines Fehlerzustands bei der Überwachung des Ladevorgangs mindestens eine Ladevorgangsunterbrechungseinrichtung zur Unterbrechung des Ladevorgangs als Sicherungseinrichtung aktiviert. Bei der Ladevorgangsunterbrechungseinrichtung handelt es sich vorzugsweise um einen betätigbaren Schalter, der die elektrische Verbindung zwischen der Energiequelle und dem elektrischen Speicher trennt. Zweckmäßigerweise wird das Verfahren nach dem Unterbrechen des Ladevorgangs nicht beendet, sondern zumindest so lange weitergeführt, bis sichergestellt ist, dass keine Gefahrensituation mehr besteht und insbesondere die externe Energiequelle von dem Fahrzeug beziehungsweise dem elektrischen Speicher beispielsweise durch das Abziehen beziehungsweise Trennen einer entsprechenden Steckverbindung, gelöst wurde. Durch das Unterbrechen des Ladevorgangs werden Personen, die sich in und/oder an dem Fahrzeug befinden, insbesondere vor Stromschlägen geschützt.

Erfindungsgemäß werden hierbei für die Prüfeinrichtung Sensoren vorgesehen, von denen der eine den Stromfluss während des Ladevorgangs und ein anderer zur Überwachung des Stillstandes des Fahrzeugs. Hierzu kann beispielsweise in einer Ausführungsform der Erfindung die Drehzahl von Rädern des Fahrzeugs erfasst werden. Die Sensoren können dabei auch mehreren Prüfeinrichtungen zugeordnet sein. Erst wenn die Sensoren eine Abweichung von einem Soll-Zustand, also einen Fehlerzustand, erfasst, werden eine oder mehrere Einrichtungen des Fahrzeugs, die zur Sicherung des Fahrzeugs dienen, sogenannte Sicherungseinrichtungen, aktiviert. Je nach Art des Fehlerzustands wird mindestens eine Sicherungseinrichtung aktiviert.

Vorzugsweise werden mehrere Sicherungseinrichtungen des Fahrzeugs aktiviert, wenn ein Fehlerzustand durch eine oder mehrere der Prüfeinrichtungen erfasst wird. Während des Ladevorgangs ist im Normalzustand somit nur die mindestens eine Prüfeinrichtung des Fahrzeugs aktiv und entzieht dem System beziehungsweise dem elektrischen Speicher Energie. Nur wenn erkannt wird, dass der Ladevorgang nicht ordnungsgemäß verläuft oder sich das Fahrzeug nicht im Stillstand befindet, sondern das Fahrzeug beispielsweise dabei ist, von der Stromtankstelle wegzurollen, werden die Sicherungseinrichtungen aktiviert, um Sicherungsmaßnahmen durchzuführen.

Vorzugsweise wird bei Erfassen eines Fehlerzustands bei der Überwachung des Stillstands des Fahrzeugs wenigstens eine Bremseinrichtung des Fahrzeugs als Sicherheitseinrichtung aktiviert. Hierbei kann es sich beispielsweise um das Steuergerät des Bremssystems des Fahrzeugs handeln, das bei Erfassen eines Fehlerzustands einen Bremsvorgang einleitet, um das Fahrzeug insbesondere schnellstmöglich zum Stillstand zu bringen. Hierdurch wird sichergestellt, dass das Fahrzeug nicht während des Ladevorgangs von einer Stromtankstelle weg rollt.

Bevorzugt wird bei Erfassen eines Fehlerzustands bei der Überwachung des Ladevorgangs mindestens eine Ladevorgangsunterbrechungseinrichtung zur Unterbrechung des Ladevorgangs als Sicherungseinrichtung aktiviert. Bei der Ladevorgangsunterbrechungseinrichtung handelt es sich vorzugsweise um einen betätigbaren Schalter, der die elektrische Verbindung zwischen der Energiequelle und dem elektrischen Speicher trennt. Zweckmäßigerweise wird das Verfahren nach dem Unterbrechen des Ladevorgangs nicht beendet, sondern zumindest so lange weitergeführt, bis sichergestellt ist, dass keine Gefahrensituation mehr besteht und insbesondere die externe Energiequelle von dem Fahrzeug beziehungsweise dem elektrischen Speicher beispielsweise durch das Abziehen beziehungsweise Trennen einer entsprechenden Steckverbindung, gelöst wurde. Durch das Unterbrechen des Ladevorgangs werden Personen, die sich in und/oder an dem Fahrzeug befinden, insbesondere vor Stromschlägen geschützt.

Gemäß einer vorteilhaften Weiterbildung der Erfindung ist vorgesehen, dass bei Erfassen eines Fehlerzustands bei der Überwachung des Ladevorgangs eine Informationseinrichtung zum Anzeigen des erfassten Fehlerzustands insbesondere an den Fahrer des Fahrzeugs, den Betreiber der externen Energiequelle und/oder an das Umfeld des Fahrzeugs als Sicherungseinrichtung aktiviert wird. Bei der Informationseinrichtung handelt es sich vorzugsweise um eine optische und/oder akustische Anzeige, die den Fahrer, den Betreiber der Energiequelle oder beliebige, sich im Umfeld des Fahrzeugs befindliche Personen vor dem Fehlerzustand warnt. So können beispielsweise unbeteiligte Personen darauf hingewiesen werden, das Fahrzeug nicht zu berühren. Der Fahrer des Fahrzeugs und der Betreiber der Ladestation beziehungsweise der externen Energiequelle werden bevorzugt über den Zustand beziehungsweise den erfassten Fehlerzustand informiert, insbesondere per Telekommunikationsmittel.

Ferner ist vorzugsweise vorgesehen, dass bei Erfassen eines Fehlerzustands bei der Überwachung eines Ladevorgangs eine Dokumentationseinrichtung zum Speichern/Dokumentieren des Fehlerzustands als Sicherungseinrichtung aktiviert wird. Der Fehlerzustand kann somit später bei einer Diagnose, beispielsweise während einer Wartung des Fahrzeugs, ausgelesen und analysiert werden.

Vorzugsweise wird bei Erfassen eines Fehlerzustands bei der Überwachung des Ladevorgangs mindestens eine Beschränkungseinrichtung zum Beschränken von Fahrfunktionen des Fahrzeugs, insbesondere in Abhängigkeit des erfassten Fehlerzustands, als Sicherungseinrichtung aktiviert. So ist beispielsweise bei Erfassen eines Fehlerzustands vorgesehen, dass durch die Beschränkungseinrichtung die Fahrfunktion des Fahrzeugs unterbunden, dem Fahrer also eine Weiterfahrt mit dem Fahrzeug nicht erlaubt wird. Hierdurch wird die Sicherheit des Fahrers bei Vorliegen eines besonders schwerwiegenden Fehlerzustands des Ladevorgangs, beispielsweise wenn ein Kurzschluss im System des Fahrzeugs erfasst wird, gewährleistet.

Die obenstehend beschriebenen, unterschiedlichen Sicherheitseinrichtungen können zusätzlich oder alternativ zueinander bei Erfassen eines Fehlerzustands aktiviert werden. Welche Sicherungseinrichtung aktiviert wird, hängt bevorzugt zum einen davon ab, über welche Sicherungseinrichtung das Fahrzeug verfügt und zum anderen von der Art des Fehlerzustands, der gegebenenfalls unterschiedliche Sicherungsmaßnahmen erforderlich macht. Besonders bevorzugt werden bei jedem erfassten Fehlerzustand zumindest die Bremseinrichtung sowie die Ladevorgangsunterbrechungseinrichtung aktiviert, um die Sicherheit des Fahrers des Fahrzeugs sowie des Betreibers der Ladestation zu gewährleisten.

Das speziell hergerichtete Steuergerät umfasst zweckmäßigerweise wenigstens einen Computerprozessor, der das Verfahren durchführt und die Prüf- und Sicherungseinrichtungen entsprechend betreibt.

Erfindungsgemäß sind als Sicherungseinrichtung des Fahrzeugs eine Bremseinrichtung, eine Ladevorgangsunterbrechungseinrichtung, eine Informationseinrichtung, eine Dokumentationseinrichtung und/oder eine Beschränkungseinrichtung vorgesehen. Die Funktionen der unterschiedlichen Einrichtungen wurden obenstehend bereits erläutert. Wie ebenfalls oben bereits beschrieben, umfasst die Vorrichtung außerdem wenigstens eine Prüfeinrichtung, die Sensoren zum Überwachen des Ladevorgangs sowie des Stillstands des Fahrzeugs umfassen. Bei dem mindestens einen Sensor zum Überwachen des Stillstands des Fahrzeugs kann es sich auch um einen optischen Sensor handeln, der beispielsweise den Fahrbahnuntergrund erfasst und eine Relativbewegung des Fahrzeugs bezüglich des Fahrbahnuntergrunds erkennt. Alternativ kann es sich bei dem Sensor zum Überwachen des Stillstandes des Fahrzeugs um einen Drehzahlsensor handeln, der die Drehzahl mindestens eines der Räder des Fahrzeugs erfasst.

Das erfindungsgemäße Computerprogramm führt alle Schritte des obenstehenden Verfahrens anhand der erfindungsgemäßen Vorrichtung zum Betreiben des Fahrzeugs (1) aus, wenn das Programm auf einem Computer läuft.

Das erfindungsgemäße Computer-Programmprodukt mit einem auf einem maschinenlesbaren Träger gespeicherten Programmcode führt das erfindungsgemäße Verfahren anhand der erfindungsgemäßen Vorrichtung zum Betreiben des Fahrzeugs (1) aus, wenn das Programm auf einem Computer abläuft.

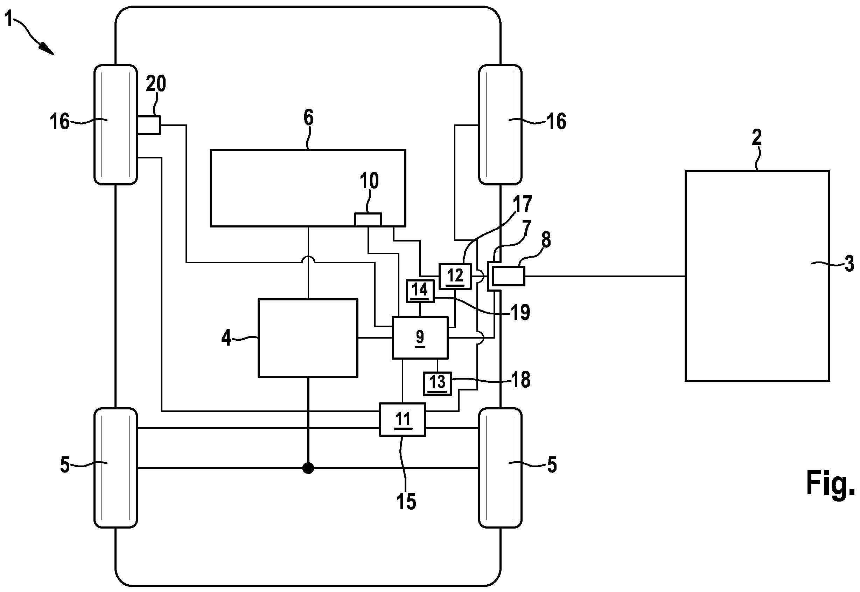

Im Folgenden soll die Erfindung anhand der Zeichnung näher erläutert werden. Dazu zeigt die einzige
- Figur: ein Fahrzeug an einer Stromtankstelle in einer vereinfachten Darstellung.

Die Figur zeigt in einer vereinfachten Darstellung ein Fahrzeug 1, das sich an einer Stromtankstelle 2 befindet, die eine externe Energiequelle 3 bildet. Das Fahrzeug 1 weist als Antriebsvorrichtung eine elektrische Maschine 4 auf, die mechanisch mit Antriebsrädern 5 des Fahrzeugs 1 verbunden ist. Der elektrischen Maschine 4 ist ein elektrischer Speicher 6 zugeordnet, der die elektrische Maschine mit elektrischer Energie versorgt. Dem elektrischen Speicher 6 ist eine Anschlussbuchse 7 zugeordnet, die von außen zugänglich ist und zum Verbinden mit der externen Energiequelle 3 dient. Die Stromtankstelle 2 weist hierzu zweckmäßigerweise einen Anschlussstecker 8 auf, der in die Anschlussbuchse 7 einsteckbar ist, um den elektrischen Speicher 6 aufzuladen.

Um die Sicherheit der sich im und/oder an dem Fahrzeug oder an der Stromtankstelle befindlichen Personen während des Ladevorgangs zu gewährleisten, weist das Fahrzeug 1 weiterhin ein speziell hergerichtetes Steuergerät 9 auf. Das Steuergerät 9 ist mit dem Energiespeicher 6 und optional auch mit der Anschlussbuchse 7 verbunden, um den Ladevorgang zu überwachen und gegebenenfalls auftretende Fehlerzustände zu erkennen beziehungsweise zu erfassen. Dazu ist das Steuergerät 9 mit einer Prüfeinrichtung 10 verbunden, die dem elektrischen Speicher 6 zugeordnet ist und den Ladezustand beispielsweise mittels eines oder mehrerer Sensoren überwacht.

Weiterhin ist das Steuergerät 9 mit mehreren Sicherungseinrichtungen 11, 12, 13 und 14 verbunden. Vorliegend handelt es sich bei der Sicherungseinrichtung 11 um eine Bremseinrichtung 15, die vorzugsweise sowohl den Antriebsrädern 5 zugeordnete Bremsen sowie den mitlaufenden Rädern 16 zugeordnete Bremsen bei Bedarf betätigt.

Bei der Sicherungseinrichtung 12 handelt es sich erfindungsgemäß um eine Ladevorgangsunterbrechungseinrichtung 17, die zwischen der Anschlussbuchse 7 und dem elektrischen Speicher 6 zwischengeschaltet ist und bei Bedarf die elektrische Verbindung zwischen dem elektrischen Speicher 6 und der Anschlussbuchse 7 unterbricht. Hierzu weist die Ladevorgangsunterbrechungseinrichtung 17 wenigstens einen insbesondere durch das Steuergerät 9 betätigbaren Schalter auf.

Bei der Sicherungseinrichtung 13 handelt es sich erfindungsgemäß vorliegend um eine Informationseinrichtung 18, die dem Fahrer des Fahrzeugs 1, dem Betreiber der Stromtankstelle 2 und/oder sonstigen, sich in der Nähe des Fahrzeugs 1 befindlichen Personen optisch und/oder akustisch Informationen insbesondere über den Ladevorgang mitteilt. Die Informationseinrichtung 18 kann dabei beispielsweise mit einem Display im Armaturenbrett des Fahrzeugs und/oder einem nach innen oder nach außen gerichteten Lautsprecher des Fahrzeugs 1 verbunden sein.

Die Sicherungseinrichtung 14 ist erfindungsgemäß als Dokumentationseinrichtung 19 ausgebildet und dient zum Speichern von Informationen über den Ladevorgang, wie untenstehend näher ausgeführt werden soll.

Das Steuergerät 9 umfasst wenigstens einen Prozessor (-chip) zum Ansteuern der unterschiedlichen Einrichtungen des Fahrzeugs 1, um die Sicherheit des Fahrers, des Betreibers der Stromtankstelle sowie übriger sich in der Nähe befindlicher Personen während eines Ladevorgangs zu gewährleisten. Das Steuergerät 9 beziehungsweise dessen Prozessor steuert die Einrichtungen dabei wie folgt an:
Zunächst wird erfasst, dass ein Ladevorgang stattfindet. Dabei hat sich das Fahrzeug 1 im Stillstand zu befinden, sodass sich beispielsweise der Anschlussstecker 8 nicht von der Anschlussbuchse 7 löst oder kritische Spannungen in dem Verbindungskabel auftreten. Hierzu prüft das Steuergerät 9, ob sich das Fahrzeug 1 im Stillstand befindet. Dazu ist eine weitere Prüfeinrichtung 20 vorgesehen, die insbesondere einen Sensor umfasst, der die Bewegung eines der Räder 16 erfasst. Wird dabei ermittelt, dass sich das Fahrzeug nicht im Stillstand befindet, weil sich beispielsweise das Rad 16 bewegt, so wird ein Fehlerzustand durch die Prüfeinrichtung 20 dem Steuergerät 9 angezeigt. In diesem Fall steuert das Steuergerät 9 die Sicherungseinrichtung 11 beziehungsweise die Bremseinrichtung 15 derart an, dass die Bremse zumindest eines der Räder 5 und/oder 16, vorzugsweise die Bremsen aller Räder 5, 16, betätigt werden, um das Fahrzeug 1 schnellstmöglich zum Stillstand zu bringen.

Erfindungsgemäß erhält das Steuergerät 9 Informationen von der Prüfeinrichtung 10, die den Ladevorgang überwacht. Stellt die Prüfeinrichtung 10 fest, dass der Ladevorgang fehlerhaft ist, beispielsweise weil zu hohe Ladeströme vorliegen, zeigt sie dem Steuergerät 9 einen Fehlerzustand an. Das Steuergerät 9 steuert daraufhin die Sicherungseinrichtung 12 derart an, dass der Schalter der Ladevorgangsunterbrechungseinrichtung 17 betätigt wird, um die elektrische Verbindung zwischen dem elektrischen Speicher 6 und der externen Energiequelle 3 zu unterbrechen, sodass der Ladevorgang zumindest vorläufig beendet wird. Gleichzeitig steuert das Steuergerät 9 die Sicherungseinrichtung 13 an, sodass zumindest der Fahrer über den aufgetretenen Fehlerzustand und gegebenenfalls den unterbrochenen Ladevorgang optisch und/oder akustisch informiert. Gleichzeitig kann die Informationseinrichtung 18 optisch oder akustisch umstehende Personen davor warnen, das Fahrzeug zu berühren.

Weiterhin steuert das Steuergerät 9 die Sicherungseinrichtung 14 an, um den aufgetretenen Fehlerzustand zu dokumentieren beziehungsweise zu speichern, sodass bei einer späteren Fehlerdiagnose oder Routineüberprüfung des Fahrzeugs 1 der Fehlerzustand ausgelesen und analysiert werden kann.

Während des Ladevorgangs werden zunächst also nur die Prüfeinrichtungen 20 und 10 aktiviert, während die übrigen Einrichtungen, insbesondere Sicherungseinrichtungen 11 bis 14, und die übrigen, hier nicht näher dargestellten Systemkomponenten des Fahrzeugs 1 deaktiviert bleiben. Erst wenn ein Fehlerzustand durch eine der Prüfeinrichtungen 10 oder 20 erfasst wurde, werden die weiteren Sicherungseinrichtungen 11 bis 14, wie obenstehend beschrieben, aktiviert. Dabei müssen auch nicht unbedingt alle Sicherungseinrichtungen aktiviert werden. Vielmehr ist es denkbar, in Abhängigkeit des aufgetretenen Fehlerzustands beispielsweise nur die Sicherungseinrichtung 11 oder die Sicherungseinrichtung 12 zu aktivieren, um die in der Nähe befindlichen Personen zu schützen. Bei den Sicherungseinrichtungen 11 und 12 handelt es sich um primäre Sicherungseinrichtungen, während die Sicherungseinrichtungen 13 und 14 eher als sekundäre Sicherungseinrichtungen zu bezeichnen sind, da sie nicht unmittelbar die Sicherheit der Personen gewährleisten.

Natürlich ist die Erfindung nicht auf die oben beschriebenen Sicherungseinrichtungen 11 bis 14 beschränkt. Vielmehr kann beispielsweise auch eine Beschränkungseinrichtung vorgesehen sein, die von einem Steuergerät 9 bei Auftreten eines Fehlerzustands derart angesteuert wird, das die Fahrfunktionen des Fahrzeugs 1 beschränkt. So wird beispielsweise ein Fahrbetrieb des Fahrzeugs 1 unterbunden, nachdem ein Fehlerzustand erfasst wurde. Auch ist es denkbar, dass die Informationseinrichtung 18 über Telekommunikationsmittel verfügt, die ein Informieren des Fahrers oder des Betreibers der Ladestation ermöglichen, auch wenn sich diese nicht in der Nähe des Fahrzeugs befinden. So ist es beispielsweise denkbar, dass bei Auftreten eines Fehlerzustands eine Kurznachricht (SMS) an den Fahrer und/oder oder den Betreiber der Stromtankstelle 2 geschickt wird.

Insgesamt hat die Erfindung den Vorteil, dass nicht alle Komponenten des Fahrzeugs 1 während des Ladevorgangs im Betrieb sind und somit Energie verbrauchen. Vielmehr werden zur Sicherung des Fahrers oder anderer Personen notwendige Komponenten, insbesondere die Sicherungseinrichtungen 11 bis 14, erst dann aktiviert beziehungsweise aufgeweckt, wenn ein Fehlerzustand während des Ladevorgangs aufgetreten ist. Dadurch wird die Lebenszeit der einzelnen Komponenten insgesamt erhöht und der Energieverbrauch reduziert. Nur das Steuergerät 9 sowie die Prüfeinrichtungen 10 und 20 sind während des Ladevorgangs permanent aktiv.

## Patentansprüche

1. Verfahren zum Betreiben eines Fahrzeugs (1), das als Antriebsvorrichtung mindestens eine elektrische Maschine (4) aufweist, die mechanisch mit Antriebsrädern (5) des Fahrzeugs (1) verbunden ist, der wenigstens ein elektrischer Speicher (6) zugeordnet ist, der die elektrische Maschine (4) mit elektrischer Energie versorgt, wobei der elektrische Speicher (6) mittels einer Stromtankstelle als externe Energiequelle (3) im Stillstand des Fahrzeugs (1) aufgeladen wird, **dadurch gekennzeichnet, dass** während des Aufladens wenigstens eine mit einem speziell hergerichteten Steuergerät (9) verbundene Prüfeinrichtung (10,20) des Fahrzeugs (1) mit Sensoren zum Überwachen des Stromflusses während des Ladevorgangs sowie des Stillstands des Fahrzeugs (1) aktiviert ist, wobei der Stillstand bedeutet, dass das Fahrzeug nicht von der Stromtankstelle wegrollt und dass erst bei Erfassen eines Fehlerzustands anhand der Abweichung des Zustands der Sensoren von einem Soll-Zustand der Sensoren durch die Prüfeinrichtung (10,20) mindestens eine als Bremsvorrichtung (15), Ladevorgangsunterbrechungseinrichtung (17), Informationseinrichtung (18), Dokumentationseinrichtung (19) und/oder Beschränkungseinrichtung für Fahrfunktionen des Fahrzeugs (1) ausgebildete Sicherungseinrichtung (11,12,13,14) des Fahrzeugs (1) aktiviert wird, und das bei Erfassen eines Fehlerzustands bei der Überwachung des Ladevorgangs mindestens die Ladevorgangsunterbrechungseinrichtung (17) zur Unterbrechung des Ladevorgangs als Sicherungseinrichtung (12) aktiviert wird.

2. Verfahren nach Anspruch 1, **dadurch gekennzeichnet, dass** bei Erfassen eines Fehlerzustands bei der Überwachung des Stillstands des Fahrzeugs (1) wenigstens die Bremseinrichtung (15) des Fahrzeugs (1) als Sicherheitseinrichtung (11) aktiviert wird.

3. Verfahren nach einem der vorhergehenden Ansprüche, **dadurch gekennzeichnet, dass** bei Erfassen eines Fehlerzustands bei der Überwachung des Ladevorgangs die Informationseinrichtung (18) zum Anzeigen des erfassten Fehlerzustands insbesondere an den Fahrer des Fahrzeugs (1), den Betreiber der externen Energiequelle (3) und/oder an das Umfeld des Fahrzeugs (1) als Sicherungseinrichtung (12) aktiviert wird.

4. Verfahren nach einem der vorhergehenden Ansprüche, **dadurch gekennzeichnet, dass** bei Erfassen eines Fehlerzustands bei der Überwachung des Ladevorgangs die Dokumentationseinrichtung (19) zum Speichern/Dokumentieren des Fehlerzustands als Sicherungseinrichtung (14) aktiviert wird.

5. Verfahren nach einem der vorhergehenden Ansprüche, **dadurch gekennzeichnet, dass** bei Erfassen eines Fehlerzustands bei der Überwachung des Ladevorgangs mindestens die Beschränkungseinrichtung zum Beschränken von Fahrfunktionen des Fahrzeugs (1) insbesondere in Abhängigkeit des erfassten Fehlerzustands als Sicherungseinrichtung aktiviert wird.

6. Vorrichtung zum Betreiben eines Fahrzeugs (1) gemäß einem Verfahren nach einem oder mehreren der vorhergehenden Ansprüche, das als Antriebsvorrichtung mindestens eine elektrische Maschine (4) aufweist, die mechanisch mit Antriebsrädern (5) des Fahrzeugs (1) verbunden ist, der ein elektrischer Speicher (6) zugeordnet ist, der die elektrische Maschine (4) mit elektrischer Energie versorgt, wobei der elektrische Speicher (6) mittels einer Stromtankstelle als externe Energiequelle (3) aufladbar ist, **dadurch gekennzeichnet, dass** wenigstens eine Prüfeinrichtung (10) und ein speziell hergerichtetes Steuergerät (9) vorgesehen sind, das alle Mittel zur Durchführung des Verfahrens nach einem der Ansprüche 1 bis 5 enthält und das Verfahren nach einem der Ansprüche 1 bis 5 ausführt.

7. Vorrichtung nach Anspruch 6, **dadurch gekennzeichnet, dass** als Sicherheitseinrichtung die Bremseinrichtung (15), die Ladevorgangsunterbrechungseinrichtung (17), die Informationseinrichtung (18), die Dokumentationseinrichtung (19) und/oder die Beschränkungseinrichtung vorgesehen sind.

8. Computerprogramm, umfassend Befehle, die bei der Ausführung des Programms durch einen Computer diesen veranlassen, alle Schritte eines Verfahrens nach einem der Ansprüche 1 bis 5 auszuführen.

9. Computerprogramm-Produkt mit einem auf einem maschinenlesbaren Träger gespeicherten Programmcode, umfassend Befehle, die bei der Ausführung des Programmcodes durch einen Computer diesen veranlassen, alle Schritte eines Verfahrens nach einem der Ansprüche 1 bis 5 auszuführen.

## Claims

1. Method for operating a vehicle (1) having, as a drive apparatus, at least one electrical machine (4) which is mechanically connected to drive wheels (5) of the vehicle (1) and is assigned at least one electrical storage unit (6) which supplies the electrical machine (4) with electrical energy, the electrical storage unit (6) being charged by means of an electricity charging station as external energy source (3) in the stationary state of the vehicle (1), **characterized in that** at least one checking device (10, 20) - connected to a specially prepared control unit (9) - of the vehicle (1) with sensors for monitoring the current flow during the charging process and the stationary state of the vehicle (1) is activated during charging, the stationary state meaning that the vehicle does not roll away from the electricity charging station, and **in that** only upon detection of a fault state on the basis of a deviation of the state of the sensors from a target state of the sensors by means of the checking device (10, 20), at least one safety device (11, 12, 13, 14) of the vehicle (1) designed as braking device (15), charging process interruption device (17), information device (18), documentation device (19) and/or restriction device for driving functions of the vehicle (1) is activated, and **in that** upon detection of a fault state during the monitoring of the charging process, at least the charging process interruption device (17) is activated as a safety device (12) for interrupting the charging process.

2. Method according to Claim 1, **characterized in that** upon detection of a fault state during the monitoring of the stationary state of the vehicle (1), at least the braking device (15) of the vehicle (1) is activated as a safety device (11).

3. Method according to either of the preceding claims, **characterized in that** upon detection of a fault state during the monitoring of the charging process, the information device (18) is activated as a safety device (12) for indicating the detected fault state in particular to the driver of the vehicle (1), the operator of the external energy source (3) and/or to the surroundings of the vehicle (1).

4. Method according to any of the preceding claims, **characterized in that** upon detection of a fault state during the monitoring of the charging process, the documentation device (19) is activated as a safety device (14) for storing/documenting the fault state.

5. Method according to any of the preceding claims, **characterized in that** upon detection of a fault state during the monitoring of the charging process, at least the restriction device is activated as a safety device for restricting driving functions of the vehicle (1), in particular depending on the detected fault state.

6. Apparatus for operating a vehicle (1) in accordance with a method according to one or more of the preceding claims, said vehicle having, as a drive apparatus, at least one electrical machine (4) which is mechanically connected to drive wheels (5) of the vehicle (1) and is assigned an electrical storage unit (6) which supplies the electrical machine (4) with electrical energy, the electrical storage unit (6) being chargeable by means of an electricity charging station as external energy source (3), **characterized in that** at least one checking device (10) and a specially prepared control unit (9) are provided, which control unit contains all means for carrying out the method according to any of Claims 1 to 5 and implements the method according to any of Claims 1 to 5.

7. Apparatus according to Claim 6, **characterized in that** the braking device (15), the charging process interruption device (17), the information device (18), the documentation device (19) and/or the restriction device are/is provided as a safety device.

8. Computer program comprising instructions which, when the program is executed by a computer, cause the latter to execute all the steps of a method according to any of Claims 1 to 5.

9. Computer program product having a program code stored on a machine-readable carrier, comprising instructions which, when the program code is executed by a computer, cause the latter to execute all the steps of a method according to any of Claims 1 to 5.

## Revendications

1. Procédé pour faire fonctionner un véhicule (1), qui possède comme arrangement de propulsion au moins une machine électrique (4), laquelle est reliée mécaniquement aux roues motrices (5) du véhicule (1), à laquelle est associé au moins un accumulateur électrique (6) qui alimente la machine électrique (4) avec de l'énergie électrique, l'accumulateur électrique (6) étant chargé lors de l'immobilisation du véhicule (1) au moyen d'une station de recharge en tant que source d'énergie externe (3), **caractérisé en ce que** pendant la charge, au moins un dispositif de contrôle (10, 20) du véhicule (1) relié à un contrôleur (9) spécialement conçu, comprenant des capteurs destinés à surveiller le flux de courant pendant l'opération de charge ainsi que l'immobilisation du véhicule (1), est activé, l'immobilisation signifiant que le véhicule ne s'éloigne pas en roulant de la station de recharge et **en ce qu'**au moins un dispositif de sécurité (11, 12, 13, 14) du véhicule (1), réalisé sous la forme d'un arrangement de freinage (15), d'un dispositif d'interruption d'opération de charge (17), d'un dispositif d'information (18), d'un dispositif de documentation (19) et/ou d'un dispositif de limitation pour les fonctions de déplacement du véhicule (1), est activé seulement en cas de détection par le dispositif de contrôle (10, 20) d'un état de défaut à l'aide de l'écart de l'état des capteurs par rapport à un état de consigne des capteurs, et **en ce qu'**au moins le dispositif d'interruption d'opération de charge (17) est activé en tant que dispositif de sécurité (12) en vue d'interrompre l'opération de charge lors de la détection d'un état de défaut lors de la surveillance de l'opération de charge.

2. Procédé selon la revendication 1, **caractérisé en ce que** lors de la détection d'un état de défaut lors de la surveillance de l'immobilisation du véhicule (1), au moins le dispositif de freinage (15) du véhicule est activé en tant que dispositif de sécurité (11).

3. Procédé selon l'une des revendications précédentes, **caractérisé en ce que** lors de la détection d'un état de défaut lors de la surveillance de l'opération de charge, le dispositif d'information (18) est activé en tant que dispositif de sécurité (12) en vue de signaler l'état de défaut détecté, notamment au conducteur du véhicule (1), à l'exploitant de la source d'énergie externe (3) et/ou à l'environnement du véhicule (1).

4. Procédé selon l'une des revendications précédentes, **caractérisé en ce que** lors de la détection d'un état de défaut lors de la surveillance de l'opération de charge, le dispositif de documentation (19) est activé en tant que dispositif de sécurité (14) en vue de mémoriser/documenter l'état de défaut.

5. Procédé selon l'une des revendications précédentes, **caractérisé en ce que** lors de la détection d'un état de défaut lors de la surveillance de l'opération de charge, au moins le dispositif de limitation est activé en tant que dispositif de sécurité en vue de limiter les fonctions de déplacement du véhicule (1), notamment en fonction de l'état de défaut détecté.

6. Arrangement pour faire fonctionner un véhicule (1) selon un procédé selon l'une ou plusieurs des revendications précédentes, qui possède comme arrangement de propulsion au moins une machine électrique (4), laquelle est reliée mécaniquement aux roues motrices (5) du véhicule (1), à laquelle est associé un accumulateur électrique (6) qui alimente la machine électrique (4) avec de l'énergie électrique, l'accumulateur électrique (6) pouvant être chargé au moyen d'une station de recharge en tant que source d'énergie externe (3), **caractérisé en ce qu'**au moins un dispositif de contrôle (10) et un contrôleur (9) spécialement préparé sont présents, lequel contient tous les moyens servant à mettre en œuvre le procédé selon l'une des revendications 1 à 5 et met en œuvre le procédé selon l'une des revendications 1 à 5.

7. Arrangement selon la revendication 6, **caractérisé en ce que** le dispositif de freinage (15), le dispositif d'interruption d'opération de charge (17), le dispositif d'information (18), le dispositif de documentation (19) et/ou le dispositif de limitation sont prévus en tant que dispositif de sécurité.

8. Programme informatique, comprenant des instructions qui, lors de l'exécution du programme par un ordinateur, amènent celui-ci à exécuter toutes les étapes d'un procédé selon l'une des revendications 1 à 5.

9. Produit de programme informatique comprenant un code de programme enregistré sur un support lisible par machine, comprenant des instructions qui, lors de l'exécution du code de programme par un ordinateur, amènent celui-ci à exécuter toutes les étapes d'un procédé selon l'une des revendications 1 à 5.
